# EUROPEAN PATENT APPLICATION

(11) **EP 2 463 971 A2**
(43) Date of publication of application: **13.06.2012**
(21) Application number: 11183955.1
(22) Date of filing: 05.10.2011
(51) Int. Cl.: H01S 3/106, H01S 3/094, H01S 3/10, H01S 3/0941, H01S 3/113, H01S 3/16

(54) **Low timing jitter, single frequency, polarized laser**

(30) Priority: 07.12.2010 US 962214
(71) Applicant: Raytheon Company, Waltham, MA 02451-1449 (US)
(72) Inventor: Sotelo, Juan C., Hawthorne, CA 90250 (US); Stultz, Robert D., Cypress, CA 90630-3090 (US); Filgas, David, Newbury Park, CA 91320-6988 (US)
(74) Representative: Desormiere, Pierre-Louis

(57) **Abstract**

A laser system includes a first laser diode (110) configured to generate first light in a first direction along an optical path; a laser resonator (130) having a gain medium (131), anisotropic saturable absorber (134), and a wavelength selective outcoupler (140) positioned in the optical path upon which the first light impinges a first side thereof for pulsed pumping of the gain medium (131), a second laser diode (170) configured to generate second light in a second direction along the optical path toward a second side of the resonator, passing through the wavelength selective outcoupler (140) unimpeded and being absorbed by the saturable absorber element (134), wherein the second light has a polarization corresponding to the orientation of the saturable absorber (134); the wavelength selective outcoupler (140) being configured to only allow third light of a predetermined wavelength to have feedback in the laser resonator, achieve gain in the resonator, and be emitted from the laser resonator. Via the second light the polarization of the laser light is controlled and timing jitter is reduced.

## Description

### BACKGROUND

This application generally relates to lasers, and in particular, to a low timing jitter, single frequency, polarized laser.

Conventional passively Q-switched lasers have been used without any attempt to reduce the timing jitter. For the systems that attempt to reduce the timing jitter they usually employ the following solutions: pulse pumping, pulse modulation, or usage of a separate modulated diode laser aimed and focused at the saturable absorber element.

In these lasers, the saturable absorber is typically bonded onto the gain medium and mirrors are coated onto each facet of the microchip making a laser resonator. For instance, anisotropic saturable absorbers exist for wavelengths near 1 micron, which can be bonded with the gain medium. Chromium yttrium aluminum garnet (Cr:YAG) is one such example of an anisotropic saturable absorber.

This monolithic design is used on a variety of applications, and is capable of producing average powers of up to a few Watts. These lasers are typically end pumped with laser diodes or fiber coupled laser diodes. The output of a high power fiber coupled laser diode may be uniform, but has random polarization because the fiber core is usually large (e.g., greater than 100 microns). The uniform output provides a convenient way to relay the pump light into the microchip and obtain different spot sizes.

However, to maintain single transverse mode operation, the spot size usually varies between several tens of microns to hundreds of microns. The laser pulse energy increases as the spot size increases, however, not linearly. The resulting output pulse may be single mode spatially, but the laser does not enable single frequency operation, polarized output, or minimize timing jitter. In addition, other lasers have used a single longitudinal mode control mechanism, but without timing jitter control or polarization control.

In light ot these drawbacks, an improved passively Q-switched laser is desired.

### SUMMARY OF THE INVENTION

The present invention relates to a laser system comprising:
a first laser diode configured to generate first light in a first direction along an optical path;
a laser resonator having a gain medium, an anisotropic saturable absorber, and a wavelength selective outcoupler, positioned in the optical path upon which the first light impinges a first side thereof so as to pump the gain medium,
a second laser configured to generate second light in a second direction along the optical path toward a second side of the laser resonator, the second light passes through the wavelength selective outcoupler and impinges on the saturable absorber element to cause the saturable absorber to bleach, wherein the second light has a polarization corresponding to the orientation of the saturable absorber; and
wherein the wavelength selective outcoupler that is part of the laser resonator is configured to only allow third light of a predetermined wavelength to have feedback, achieve gain, and be emitted by the laser resonator.

In this embodiment, the first light from the first laser diode is absorbed in the gain medium, In addition, the second light generated by the second laser diode passes through the wavelength selective outcoupler unimpeded and is absorbed by the saturable absorber, causing it to bleach.

According to a particular embodiment of the invention, the polarization of the second light is parallel with the orientation of the saturable absorber.

According to a particular embodiment of the invention, the pump power of the first laser diode is between about 4.6 - 5.2 W.

According to a particular embodiment of the invention, in operation of the laser system, the laser resonator is synchronized with the second laser diode.

According to a particular embodiment of the invention, in operation of the laser system, the first laser diode is operated continuously or pulsed.

According to a particular embodiment of the invention, in operation of the laser system, the second laser diode is pulsed.

According to a particular embodiment of the invention, the gain medium and the saturable absorber comprise a composited lasing medium.

According to a particular embodiment of the invention, the composite lasing medium is a microchip.

According to a particular embodiment of the invention, facets of the composite lasing medium are mirrored.

According to a particular embodiment of the invention, the gain medium and the saturable absorber are diffusion or adhesive-free bonded together.

According to a particular embodiment of the invention, the gain medium is selected from the group consisting of: ytterbium yttrium aluminum garnet (Yb:YAG), neodymium yttrium aluminum garnet (Nd:YAG), holium yttrium aluminum garnet (Ho:YAG), and erbium yttrium aluminum garret (Er:YAG).

According to a particular embodiment of the invention, the saturable absorber is selected from the group consisting of: chromium yttrium aluminum garnet (Cr:YAG), vanadium yttrium aluminum garnet (V³⁺:YAG), cobalt spinel (Co²⁺: MgAl2O4), and bis 4-dimethyl-aminodithiobenzil-nickel,

The saturable absorber is for instance dissolved in 1,2-dichloroethane (BDN in a cellulose acetate).

According to a particular embodiment of the invention, the saturable absorber is cut and/or polished to have the predetermined orientation.

In a preferred embodiment, the predetermined orientation of the saturable absorber is the <110> crystal orientation.

According to a particular embodiment of the invention, the saturable absorber is birefringent to allow the laser light emitted to favor a single polarization state.

In a particular embodiment, the material properties of the saturable absorber are in birefringement.

According to a particular embodiment of the invention, the wavelength selective outcoupler is selected from the group consisting of: (i) a Volume Bragg Grating (VBG), (ii) an etalon and (iii) the cavity length of the gain medium and saturable absorber is selected so as to only allow 1 mode of operation.

According to a particular embodiment of the invention, the laser system is a passively Q-switched laser.

According to a particular embodiment of the invention, the laser system further comprises a mirror having an aperture, the mirror reflecting second light from the second laser to the laser resonator and the aperture allowing the third light to pass through the mirror.

The invention also relates to a method for forming a laser system comprising:
positioning a first laser diode that is configured to generate light in a first direction along the optical path to pump a laser resonator;
selecting an anisotropic saturable absorber having a predetermined orientation for use in the laser resonator;
positioning a second laser diode that is configured to generate second light having a polarization corresponding to the orientation of the saturable absorber, in a second direction along the optical path, toward the side of the saturable absorber element to cause the saturable absorber to bleach, and
positioning a wavelength selective outcoupler in the optical path to form a laser resonator and to allow light of a predetermined wavelength to have feedback, achieve, gain, and be emitted by the laser resonator.
As the skilled will understand, the invention may relate to any combination of at least two of the particular embodiments set out above.

These and other aspects of this disclosure, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not a limitation of the invention. In addition, it should be appreciated that structural features shown or described in any one embodiment herein can be used in other embodiments as well.

### BRIEF DESCRIPTION OF THE DRAWINGS

Figure 1 illustrates a schematic of an exemplary laser, in accordance with an embodiment.

Figure 2 is a plot of transmission characteristics for one known Cr:YAG saturable absorber which may be used in a laser resonator, in accordance with an embodiment.

Figures 3A and 3B are plots showing wavelength control of laser resonator using wavelength selective outcoupler in accordance with an embodiment. Figure 3A shows the normalized intensity of light transmitted through the laser resonator without using the wavelength selective outcoupler. Figure 3B shows the normalized intensity of light transmitted through the laser resonator using the wavelength selective outcoupler.

Figure 4 depicts synchronizing the pulse of the laser resonator by the second laser diode, in accordance with an embodiment.

Figure 5 is a plot of pump power and pulse repetition frequency for a laser system, in accordance with an embodiment.

Figure 6 is a plot of energy and pulsewidth for the laser system, in accordance with an embodiment.

### DETAILED DESCRIPTION

In light of the aforementioned drawbacks, the inventors considered various factors that they believed contribute to lowering the timing jitter in lasers. These included, among other things, pulse pumping, pump modulation, and bleaching of the saturable absorber with an additional light source.

Pulse pumping is a technique in which the pump source is turned ON and OFF in synchronization with the laser output pulse. This is an effective way to control the timing jitter, but has not been found to be highly effective and typically limits the pulse repetition frequency (PRF), for instance, to several kHz.

Pump modulation is a technique in which the pump always remains ON, but in which pumping is increased significantly when the laser pulse is desired, This technique is similar to pulse pumping, but adds a direct current (DC) bias to the pump source, By using pump modulation, a PRF greater than tens of kHz may be obtained, but the reduction in timing jitter is generally mild (i,e., about 2% of the PRF).

Bleaching is a technique in which an additional laser source, such a laser diode, is aimed and focused on the saturable absorber of the laser resonator in the region where the primary laser pulse is emitted. The additional laser diode can be coupled to the saturable absorber, for example, by: a dichroic coating, off-axis geometric coupling, co-axial geometric overlap, or the use of a volume Bragg grating. In operation, the primary laser diode pumps the gain medium and provides gain while the second laser diode bleaches the saturable absorber, This technique offers the possibility of high PRF's (e.g. up to hundreds of kHz) and significantly reduced timing jitter (e.g. about 1% of the PRF).

Timing jitter may be further reduced by increasing the power from the additional bleaching laser diode. However, for a conventional high power fiber coupled single strip laser diode with a 100 µm core and 0.15 NA, the average power for the bleaching laser diode is only about 10W. In addition, timing jitter may also be improved by decreasing the number of longitudinal modes propagating. To promote single longitudinal mode operation, the laser cavity length may be reduced such that the mode spacing is equal to or larger than the gain medium bandwidth. Accomplishing this, however, places limitations on pulse energy and pulsewidth of the microchip resonator.

Single longitudinal mode operation has been obtained in microchips using a Volume Bragg Grating (VBG) which only provides feedback for one mode. The utilization of a VBG enables different laser configurations with increased cavity lengths, thus enabling significantly higher average power and average pulse energy while maintaining single frequency operation. The utilization of a VBG to force the laser into single frequency operation in conjunction with the second bleaching laser diode results in a significant reduction in timing jitter.

To further lower the timing jitter, the output polarization of the laser may be limited to one polarization state using: stress-induced birefringence in the gain medium or saturable absorber, anisotropic coatings, an anisotropic gain medium, and/or an anisotropic saturable absorber. Stress-induced birefringence is when the gain medium or saturable absorber is intentionally over-constrained in the mounting or cooling apparatus. The induced birefringence is such that a single polarization is preferred causing the laser output to be polarized. This approach can produce stable results under certain environments, but typically the polarization extinction ratio is low and repeatability may be an issue. Anisotropic coating may be used, however, these can be damaged easily in operation. Gain mediums with anisotropy may also have sufficient performance, but they require the pump to be polarized and may not be suitable for all wavelengths,

Having evaluated these various techniques and technologies, the inventors developed a low timing jitter, single frequency, polarized laser. According to one or more embodiments, a laser system comprises: a first laser diode configured to generate first light in a first direction along an optical path; a laser resonator that is composed of a gain medium, an anisotropic saturable absorber, and a wavelength selective outcoupler, positioned in the optical path upon which first light impinges a first side thereof so as to pump the gain medium, light from the first laser diode is absorbed in the gain medium, a second laser diode configured to generate second light in a second direction along the optical path toward a second side of the laser resonator, will pass through the outcoupler and will be absorbed by the saturable absorber, forcing it to bleach, wherein the second light has a polarization corresponding to the orientation of the saturable absorber, a wavelength selective outcoupler that is part of the laser resonator, is configured to only allow a third light of a predetermined wavelength to have feedback, acquire gain, and to be emitted from the laser resonator.

This laser has been found to provide very low timing jitter (e.g., about 0.1% of the PRF period), single frequency operation, controlled output polarization, and low pulse-to-pulse energy variation (e.g., about 1%). More particularly, the combination of the anisotropic saturable absorber to promote a polarized output, the wavelength selective outcoupler to provide single frequency operation, and the (bleaching) second laser diode to reduce the timing jitter, provide a significant reduction in timing jitter that was not realized with conventional lasers having a bleaching second laser diode.

Although the birefringence in laser resonators is generally mild, polarization extinction can be increased by using a slightly polarized pump source from the second laser diode. Moreover, if the residual pump light that reaches the saturable absorber is parallel with the orientation of the pumping light polarization, then the resulting polarization extinction ratio can exceed, for instance, 20 dB. The high polarization extinction ratio improves timing jitter by forcing the laser to emit light along only one axis.

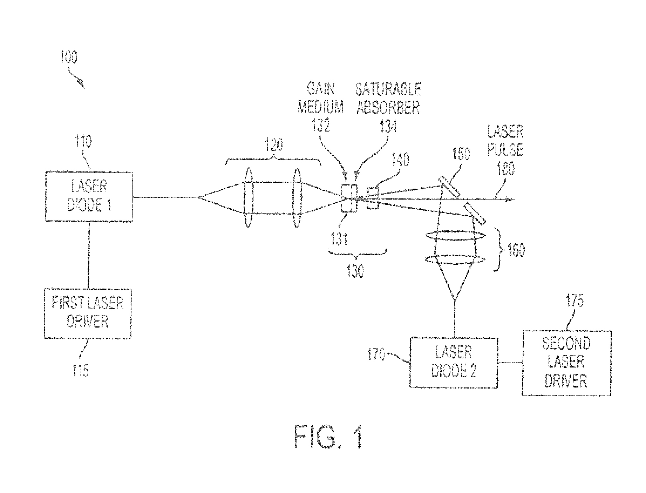

Figure 1 illustrates a schematic of exemplary laser **100** in accordance with an embodiment. Laser **100** is configured as a passively Q-switched laser.

Laser **100** generally includes first laser diode **110**, first current driver **115**, first relay optics **120**, laser resonator **130** (comprised of composite lasing medium **131** - that is formed of gain medium **132** and saturable absorber **134** - and wavelength selective outcoupler **140**), mirror **150**, second relay optics **160**, second laser diode **170**, and current driver **175**.

First laser diode **110** is configured to pump the composite lasing medium **131** formed of gain medium **132** and saturable absorber **134** and wavelength selective outcoupler **140**. First laser diode **110** may be, for example, a laser diode manufactured by LIMO Lissotschenko Mikrooptik GmbH. For instance, first laser diode **110** may be a 940 nm fiber coupled laser diode having 100 µm/125 µm core/clad (NA = 0.22) and operated at about 5W. First laser diode **110** may be controlled by first current driver **115**. which may be configured to operate first laser diode **110** either in a continuously or pulsed mode.

First relay optics **120** may includes one or more (two shown) lens elements configured to transmit light from first diode to gain medium 132 and saturable absorber **134**. In one implementation, two lens elements may be provided having focal lengths of 100 mm and 80 mm, respectively (left-to-right in figure) to relay and focus light from first last diode **110**.

Saturable absorber **134** may be composed of a saturable absorber material having a predetermined orientation. Saturable absorber **134** may be anisotropic that promotes polarized laser pulses, and results in very low timing jitter values. In one embodiment, gain medium **132** and saturable absorber **134** may be formed together as composite lasing medium **131** that is constructed by diffusion or adhesive-free bonding the gain medium with the saturable absorber (e.g., at an elevated temperature below the melting point thereof), such as, for example, disclosed in U.S. Patent No. 5,394,413, herein incorporated by reference, in its entirety. The facets of the composited lasing medium **131** may be mirrored.

In some instances, gain medium **132** may be ytterbium yttrium aluminum garnet (Yb:YAG) and the saturable absorber may be chromium yttrium aluminum garnet (Cr:YAG). For instance, in one embodiment, the Cr:YAG saturable absorber **134** may be cut and polished so as to be oriented in the <110> orientation. In this orientation, the material properties of the crystal will be in birefringement, thus allowing laser **100** to favor a single polarization state. For highest transmission, the polarization of light from second laser diode **170** will be parallel to the orientation of the saturable absorber.

Of course, it will be appreciated that other gain mediums 132 and/or saturable absorber **134** materials might also be used. For example, some other gains mediums may include: neodymium yttrium aluminum garnet (Nd:YAG), holium yttrium aluminum garnet (Ho:YAG), and erbium yttrium aluminum garnet (Er:YAG). And, some other saturable absorbers may include: vanadium yttrium aluminum garnet (V³⁺: YAG), cobalt spinel (Co²⁺:MgAl2O4), and bis 4-dimethyl-aminodithiobenzil-nickel (BDN). Some of these may be dissolved, for example, in 1,2-dichloroethane (BDN in a cellulose acetate).

Composite lasing medium **131** including gain medium **132** and saturable absorber **134** are end pumped using light from first laser diode **110.** Spot sizes on gain medium **132** and saturable absorber **134** can be varied to change the pulse energy, for instance, on the order of about 10 to 100 microns for single spatial mode operation. The pulsewidth can be varied, for instance, on the order of about a few nanoseconds. It will be appreciated that laser resonator **130** may require some time to thermally stabilize. The center wavelength tends to increase slightly as laser resonator **130** heats up. Laser resonator **130** may inherently exhibit multiple modes if care in temperature or design is not exercised. If so, the timing jitter will not be optimal (i.e., minimized) and fluctuate.

Thus, wavelength selective outcoupler **140** of laser resonator **130** may be configured to enable the laser **100** to operate in a single longitudinal mode, thus providing low energy variation. More particularly, wavelength selective outcoupler **140** is a passive device.

The beam formed from laser resonator **130,** may have only have one longitudinal mode. In some instances, wavelength selective outcoupler **140** may be a Volume Bragg Grating (VBG), an etalon, or the cavity length of the gain medium and saturable absorber can be made sufficiently small to only allow one mode of operation.

A VBG may be formed of a bulk piece of glass or polymer and having a spatially modulated interference optical grating pattern. VBGs may be configured for use as wavelength selective outcoupler **140,** based on, among other things, **wavelength,** reflectivity, (light) acceptance angle and physical size. One benefit of using VGBs is that they generally have a low sensitivity to temperature.

According to one implementation, wavelength selective outcoupler **140** may be configured to have a center reflectivity and bandwidth at approximately 1030.45 nm. This particular wavelength is selected to co-align with the peak gain cross section of our gain medium. Other wavelength selective outcouplers may also be used having different wavelength transmission characteristics. For example, an etalon is an optical interferometer is which can function as a very precise narrowband wavelength filter.

Mirror **150** may include any mirror element having a hole or other aperture adapted to allow a primary pulse from the laser resonator **130** to pass through while reflecting light from the second laser diode **170.** For instance, mirror **150** may be a conventional silvered mirror including an aperture. And, in one embodiment, the aperture may be about 0.1 in diameter.

Second relay optics **160** may include one or more (two shown) lens elements configured to transmit light from second laser diode **170** to saturable absorber **134** and gain medium **132** via mirror **150** and through wavelength selective outcoupler **140.** In one implementation, two lens elements may be provided having focal lengths of 100 mm and 80 mm, respectively (bottom-to-top in figure), to relay and focus light from second last diode **170.**

Second laser diode **170** is configured to provide a polarized beam controlled by second current driver **175.** Second laser diode **170** may also bye referred to as a "bleaching" laser diode, which acts as a switch to help force laser resonator **130** to pulse. Second laser diode **170** may be configured to be turned ON when a pulse from laser resonator **130** is desired. It may be configured to turn OFF (i) after such a pulse emission or (ii) set to a fixed pulse length. In some instances, second laser diode **170** may be a fiber coupled laser diode with a shortened multimode fiber to help maintain linear polarization of the pulse beam. For example, in one implementation, second laser diode **170** may be a 940 nm fiber coupled laser diode having 100 µm/125 µm core/clad (NA = 0.15) and operated at about 25W. Laser diodes of this configuration are commercially available, for example, from Bookham, Inc. Second current driver **175** may be a pulsed current driver and may be configured to generate 0.5 - 1.0 µs pulsewidth operating at 8 Amps and having a frequency of 20 kHz. The polarization of the second laser diode **170** is configured to be substantially parallel with the orientation of laser resonator **130.**

Laser **100** provides pulsed operation, single mode operation (e.g., TEM₀₀), low pulse energy variation, single frequency (single longitudinal mode), and is linearly polarized.

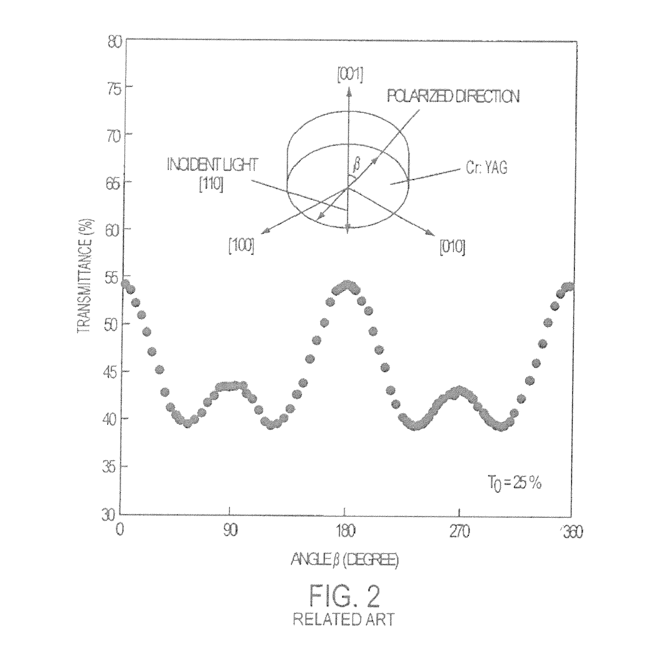

Figure 2 is a plot of transmission characteristics for one known Cr:YAG saturable absorber **134** which may be used in a laser resonator **130** in an embodiment. Aspects of this Cr:YAG saturable absorber are described in H. Sakai et al. "Polarization stabilizing for diode-pumped passively Q-switched Nd:YAG microchip lasers" Optical Society of America, 2005, herein incorporated by reference in its entirety. This particular saturable absorber, with <110> crystal orientation, is bonded with the gain medium to form composite lasing medium **131.** In some instances, composite lasing medium **131** may be fabricated as a microchip laser as discussed, for example, in the aforementioned article. The manufacturer of this saturable absorber could be Scientific Materials or VLOC or other crystal manufacturers.

The plot in Figure 2 shows that transmission of incident light through the saturable absorber as a function of the polarization angle β (i.e., corresponding to the polarization direction of the incident light normal to the surface of the saturable absorber). As will be appreciated, at an angle β of about 0 or 180 degrees, the transmission of the saturable absorber is at a maximum. This corresponds to light impinging the saturable absorber having a polarization state substantially parallel to the <001> crystal orientation of the saturable absorber. Other polarization states of the incident light are significantly lower.

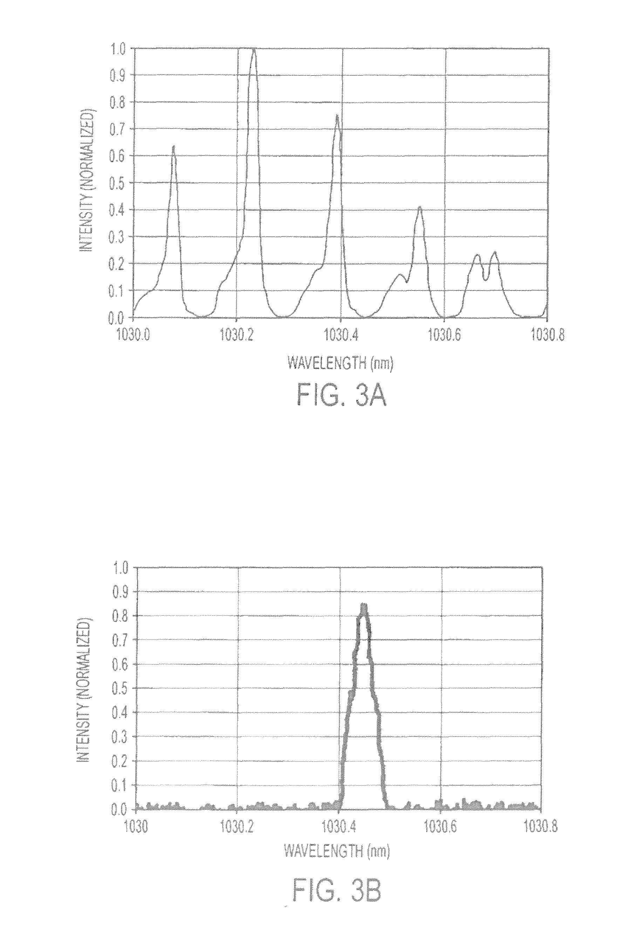

Figures 3A and 3B are plots showing timing jitter control of laser **100** using wavelength selective outcoupler **140** in accordance with an embodiment. The results shown in these plots were measured using a 10 pm resolution optical spectrum analyzer (OSA).

Figure 3A shows the normalized intensity of light of a laser resonator without using wavelength selective outcoupler **140.** The wavelength of operation for this implementation of laser **100** is intended to be about 1030.4 nm. However, various peaks occur having a spectral width of about 0.2 nm (20 pm). Each peak corresponds to a longitudinal mode of the laser resonator.

Figure 3B shows the normalized intensity of light from the laser resonator **130.** As will be appreciated, only one peak in the wavelength is seen, with all other peaks have been eliminated. The light transmitted corresponds to the operative wavelength of the wavelength selective outcoupler, around 1030.4 nm, having a spectral width around about 40-60 pm.

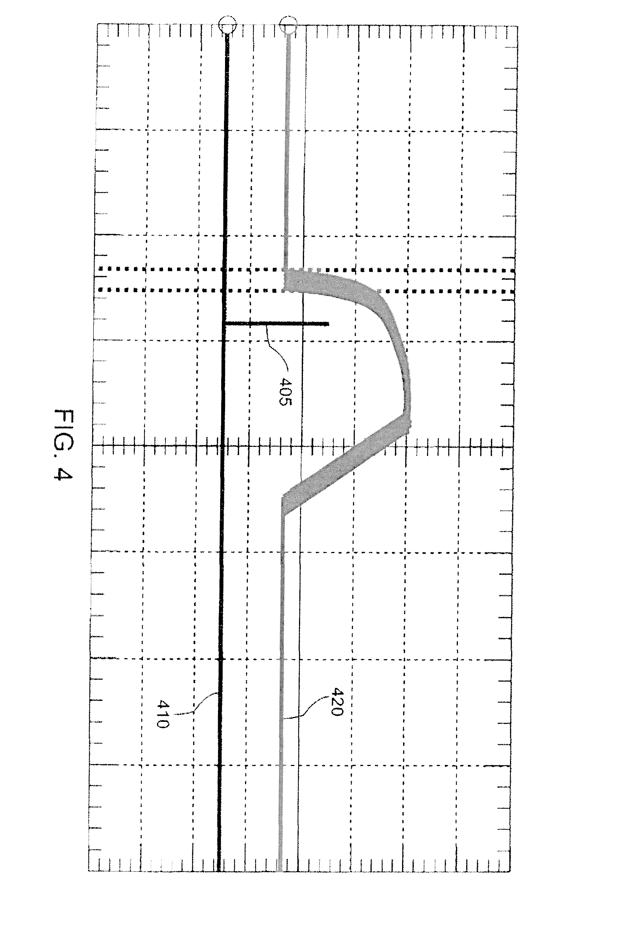

Figures 4 to 6 show plots of various operating parameters of the laser **100** in accordance with embodiments.

Figure 4 depicts synchronizing the pulse of laser resonator **130** by second laser diode **170**, in accordance with an embodiment.

Line **410** shows multiple laser pulses from laser resonator **130,** overlapped on top of each other. Line **420** shows multiple optical pulses from second laser diode 170. The width of line 420 illustrates the timing jitter experienced by the laser resonator. The plots show tens of thousands, if not more, pulses overlaid. In one example, 92,000 pulses were monitored.

Laser resonator **130** generates pulses, depicted as pulse **405,** in response to a pulse from second laser diode **170.** In this example, the output of the second laser diode **170** was 18 W peak power, achieved by pulsing with 8.4 Amps at a 0.5 µs pulsewidth. The output power of laser **100** was 1.08W, having a pulsewidth of 820 ps. The timing jitter is depicted as the thickness of line **420.** In this case, the timing jitter was measured to be about 40 ns. The current pulse line **420** of second laser diode **170** shifts with respect to the laser pulse **405.**

Results show that by using laser **100,** the timing jitter has been lowered by approximately 2 orders of magnitude (e.g., 20 dB). Moreover, it has been found that for pump power of first laser diode **110** to be between about 4.6 - 5.2 W, optimal performance is obtained.

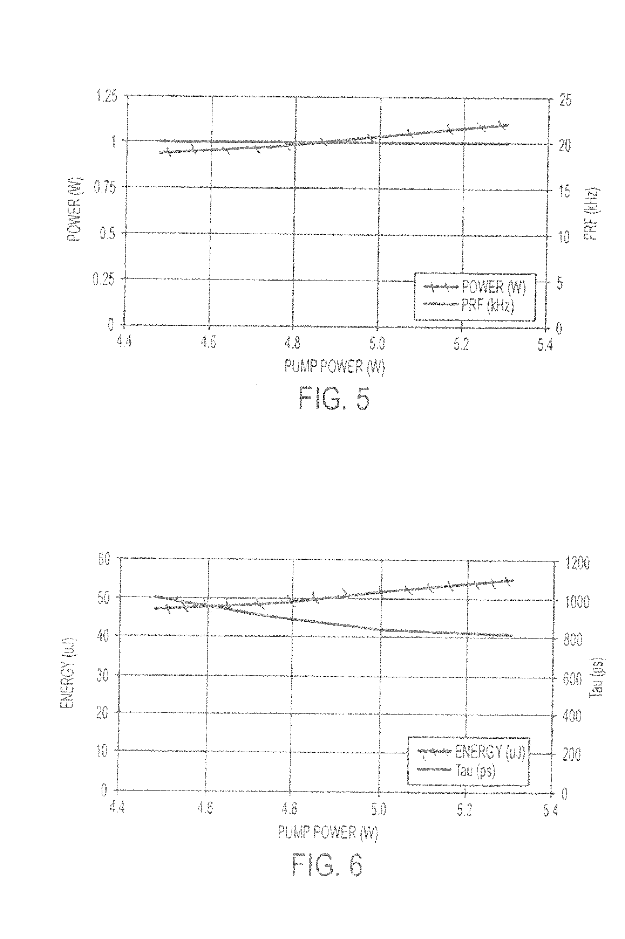

Figure 5 is a plot of pump power and PRF for laser **100** in accordance with an embodiment. The pulse energy only slightly increases as the pump power from first laser diode **110** varies. Moreover, second diode **170** keeps the PRF maintained constant at about 20 kHz for a wide range of pump powers.

Figure 6 is a plot of energy and pulsewidth (T) for laser **100,** in accordance with an embodiment. As the pump power of first laser diode **110** increases, the energy per pulse increases slightly and pulsewidth decreases over that range ultimately approaching the pulsewidth that would have been seen if the second laser diode were off.

Laser **100** enables passively Q-switched lasers to reach timing jitter performance levels that were only previously observed in actively Q-switched lasers. As discussed above, laser **100** combines a gain medium **132** and saturable absorber **134** having an anisotropic saturable absorber with a predetermined orientation, second laser diode **170** to generate second light having a polarization corresponding to the orientation of the saturable absorber **134**; and wavelength selective outcoupler **140** to only allow operating light of a predetermined wavelength to obtain feedback and achieve gain, into a single system.

Second laser diode **170** is aimed and focused on saturable absorber **134** of laser resonator **130** in region where laser output is emitted, enabling timing jitter control. Wavelength selective outcoupler **140** enables the laser to operate in a single frequency, thus providing low energy variation. Saturable absorber **134** and polarized output of second laser diode **170,** provides laser polarization control.

The various embodiments described herein provide low timing jitter, single longitudinal mode, output polarization control in a robust, and a passive microchip laser design. Many laser and/or laser radar (LADAR) systems may benefit from this enhanced performance.

Other embodiments, uses and advantages of the inventive concept will be apparent to those skilled in the art from consideration of the above disclosure and the following claims. The specification should be considered non-limiting and exemplary only, and the scope of the inventive concept is accordingly intended to be limited only by the scope of the following claims.

## Claims

1. A laser system (100) **characterized in that** it comprises:
a first laser diode (110) configured to generate first light in a first direction along an optical path;
a laser resonator (130) having a gain medium (132), an anisotropic saturable absorber (134), and a wavelength selective outcoupler (140), positioned in the optical path upon which the first light impinges a first side thereof so as to pump the gain medium,
a second laser diode (170) configured to generate second light in a second direction along the optical path toward a second side of the laser resonator (130), the second light passes through the outcoupler (140) and impinges on the saturable absorber (134) element to cause the saturable absorber to bleach, wherein the second light has a polarization corresponding to the orientation of the saturable absorber; and
wherein the wavelength selective outcoupler (140) that is part of the laser resonator is configured to only allow third light of a predetermined wavelength to have feedback, achieve gain, and be emitted by the laser resonator.

2. The laser system according to claim 1, wherein the polarization of the second light is parallel with the orientation of the saturable absorber.

3. The laser system according to claim 1 or 2, wherein, in operation of the laser system, the laser resonator is synchronized with the second laser diode.

4. The laser system according to any one of claims 1 to 3, wherein, in operation of the laser system, the first laser diode is operated continuously or pulsed.

5. The system according to any one of claims 1 to 4, wherein, in operation of the laser system, the second laser diode is pulsed.

6. The laser system according to any one of claims 1 to 5, wherein the gain medium and the saturable absorber comprise a composited lasing medium.

7. The laser system according to claim 6, wherein the composite lasing medium is a microchip.

8. The laser system according to claim 6 or 7, wherein facets of the composite lasing medium are mirrored.

9. The laser system according to any one of claims 1 to 8, wherein the gain medium and the saturable absorber are diffusion or adhesive-free bonded together.

10. The laser system according to any one of claims 1 to 9, wherein the gain medium is selected from the group consisting of: ytterbium yttrium aluminum garnet (Yb:YAG), neodymium yttrium aluminum garnet (Nd:YAG), holium yttrium aluminum garnet (Ho:YAG), and erbium yttrium aluminum (Er:YAG).

11. The laser system according to any one of claims 1 to 10, wherein the saturable absorber is is selected from the group consisting of: chromium yttrium aluminum garnet (Cr:YAG), vanadium yttrium aluminum garnet (V³⁺:YAG), cobalt spinel (Co²⁺:MgAl2O4), and bis 4-dimethyl-aminodithiobenzil-nickel,

12. The laser system according to claim 12, wherein the saturable absorber is dissolved in 1,2-dichloroethane (BDN in a cellulose acetate).

13. The laser system according to any one of claims 1 to 12, wherein the saturable absorber is cut and/or polished to have the predetermined orientation.

14. The laser system according to claim 13, wherein the predetermined orientation of the saturable absorber is the <110> crystal orientation.

15. The laser system according to claim 13 or 14, wherein the saturable absorber is birefringent to allow the laser light emitted to favor a single polarization state.

16. The laser system according to any one of claims 1 to 15, wherein the wavelength selective outcoupler is selected from the group consisting of: (i) a Volume Bragg Grating (VBG), (ii) an etalon and (iii) the cavity length of the gain medium and saturable absorber is selected so as to only allow 1 mode of operation.

17. The laser system according to any one of claims 1 to 16, further comprising a mirror having an aperture, the mirror reflecting second light from the second laser to the laser resonator and the aperture allowing the third light to pass through the mirror.

18. A method for forming a laser system (100), **characterized in that** it comprises:
positioning a first laser diode (110) that is configured to generate light in a first direction along the optical path to pump a laser resonator (130);
selecting an anisotropic saturable absorber (134) having a predetermined orientation for use in the laser resonator;
positioning a second laser diode (170) that is configured to generate second light having a polarization corresponding to the orientation of the saturable absorber (134), in a second direction along the optical path, toward the side of the saturable absorber element to cause the saturable absorber to bleach; and
positioning a wavelength selective outcoupler (140) in the optical path to form a laser resonator and to allow light of a predetermined wavelength to have feedback, achieve, gain, and be emitted by the laser resonator.
